(19) Europäisches Patentamt
European Patent Office
Office européen des brevets

(11) **EP 4 202 780 A1**

(12) **EUROPEAN PATENT APPLICATION**

(43) Date of publication:
**28.06.2023 Bulletin 2023/26**

(21) Application number: **21216942.9**

(22) Date of filing: **22.12.2021**

(51) International Patent Classification (IPC):
**G06N 3/08** *(2023.01)* **G06N 20/20** *(2019.01)*
**G06N 5/00** *(2023.01)*

(52) Cooperative Patent Classification (CPC):
**G06N 3/09; G06N 5/01; G06N 20/20**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Hangauer, Andreas
80634 München (DE)**
• **Lebacher, Michael
84513 Töging am Inn (DE)**

(74) Representative: **Siemens Patent Attorneys
Postfach 22 16 34
80506 München (DE)**

(54) **BOX-BASED DETECTION AND REPRESENTATION OF DECISION REGIONS OF AI BASED CLASSIFICATION ALGORITHMS**

(57) The invention discloses an automated method for detecting decision regions of an AI based classification algorithm, comprising:
- providing multidimensional data points comprising measured sensor data,
- classifying the data points by applying the AI based classification algorithm,
- detecting decision regions by a data clustering algorithm, whereby each decision region contains data points of only one class,

the data clustering algorithm characterized by:
- the data points are represented by feature vectors belonging to a first class,
- each decision region is approximated by a set union of multidimensional boxes,
- wherein every box is spanned around one data point using a box generating algorithm.

Uses of the disclosed method and a related system are disclosed as well.

FIG 4

$$L1 = \{\{A, B, C, D\}, \{E, F, G, H\}\}$$
$$L2 = \{\{I, J, K, L\}, \{M, N, O\}\}$$

$$z_{i, max} = (z_{1, i, max}, z_{2, i, max})$$
$$z_{i, min} = (z_{1, i, min}, z_{2, i, min})$$

EP 4 202 780 A1

**Description**

FIELD OF THE DISCLOSRE

The present disclosure relates to an automated method, e.g., a computer-implemented method, and a system for detecting decision regions of an AI based classification algorithm using measured sensor data. The present disclosure further relates to a use of the disclosed method

BACKGROUND OF THE DISCLOSRE

AI models, e.g., machine learning algorithm, are widely used for different purposes, e.g., condition monitoring, product sorting, quality control, etc.

Condition monitoring: Sensors are omnipresent in all kinds of heavy machinery and equipment and, therefore, highly relevant for many different business fields. One especially important application field of sensors is monitoring the functionality of heavy machinery such as pumps, turbines, die casting machines etc. To do so, sensors are installed on these machines and measure different physical conditions such as current, temperature, pressure which enables monitoring of the state of the system. If the machinery is subject to different damages, the sensor values typically show suspicious patterns and anomalies in the data which allow to train machine learning models (= AI models) for detecting these anomalies.

Product sorting / quality control: Sorting of items or identification of alien objects from various sensor data is an important and frequent task in industry. Here, the sensor generated data is analysed to identify the type of incoming objects (e.g., classify by material, shape, colour, etc.) or to detect wrong objects which could either cause contaminations in the end-product or to simply identify incorrectly produced goods. Such systems typically need to be adaptive and make explainable decisions in the sense that they need to adapt to new situations (new material, new class of good, etc.) and generate decisions that can be evaluated and understood by the human machine operator. This explanation then can be used by the operator to efficiently make use of the adaptive property of the system, e.g., to refine the system behaviour with the aim to subsequently reduce false alarms, false classifications and/or related errors.

However, there are multiple problems related to process information from algorithms based on sensor data that still need to be solved. One especially crucial aspect comes with the identification and presentation of decision regions. In the given example with sensor data, decision regions are subareas of the data where the classifier (= AI model) decides either on anomalies or not (or on classes of different objects as in the example above). This is important to know in many cases that are of high practical relevance:

- Evaluation of the model by domain experts: Does it make sense to output an anomaly or a certain class for certain sensor data combinations?

- Evaluating the robustness of the model: Are there regions in the data where a small change of the input leads to a strong change in the output?

- Detection of overfitting: Are the decision regions fragmented and consist of small areas with only a few data points each or do they consist of larger, connected areas?

- Evaluation and comparison of multiple models: Given that we have fitted multiple models, how do their decision regions intersect? For which data regions do we expect different answers by the algorithms? This is important for evaluation of adaptive systems.

Consequently, and motivated by the points above, it is important to achieve a robust and scalable detection and representation of decision regions when applying machine learning algorithms to sensor data for the purpose of anomaly detection and/or classification.

A decision region detection method must satisfy the following conditions:

a. The detection of the decision regions must be independent from the underlying decision model (i.e., the algorithm or machine learning model).

b. It must scale to a high dimension (many observations and features) .

c. The result must be human-interpretable.

d. It must be possible to compare multiple decision regions defined by multiple arbitrary algorithms.

e. The algorithm must perform sufficiently fast.

Satisfying one or more of the conditions a. to e. following state of the art solutions are known.

For model types with intrinsically interpretable decision regions

For many different algorithms the decision regions can be obtained directly and without efforts from the model itself. Examples are algorithms where the decision regions are separated by linear lines: the Linear Probability Model (LPM), Generalized Linear Models (GLM), Support Vector Machines (SVM), Decision Trees, etc. Furthermore, there exist models where the decision regions are not given by linear lines but are still easy to extract, for example the k-nearest neighbour algorithm. While for those algorithms it is easy to extract the decision regions, they are restricted to a certain model class and therefore not satisfying 1a and also 1d if one of the algorithms does not provide intrinsically interpretable decision regions.

For approximations of the decision regions

There exist some approaches to approximate the decision regions. For example, by finding convex hulls around the regions where the underlying model predicts a given class or alternatively approximating them with piece-wise linear components. However, these approaches are computationally expensive for even moderate dimensional data (e.g., 10 dimensions) and violate b. and e. It is also not obvious how the approximated objects can easily be used for model comparison (violating d.).

For Deep Decision boundary instance Generation (DeepDIG)

DeepDIG is a method based on adversarial example generation to generate samples near the decision boundaries but only for deep neural networks (hence violating a.). It also does not provide an obvious answer of how to use it for comparing multiple models (violating d.).

For local approximation with model-agnostic methods

Model-agnostic local methods such as LIME try to approximate decision boundaries locally with linear functions. However, to aggregate the local behaviour to a global one all points used for training must be processed (violating b.) and the aggregate might not be consistent in the sense that local decision regions could be conflicting (violating c.), this is especially problematic when comparing multiple models (violating d.).

SUMMARY OF THE DISCLOSURE

The objective of the present invention is to provide a solution for an improved detection and an enhanced explicit representation of decision regions compared to state of the art when using machine learning algorithms for the purpose of anomaly detection and/or classification.
To accomplish the objective, the present invention provides a solution according to the independent claims. Advantageous embodiments are provided in the dependent claims.
According to a first aspect the detection and explicit representation of decision regions based on measured data is disclosed. According to a second aspect an algorithmic generation of further data based on initial data measured by a sensor is disclosed.
It is highlighted, that the disclosed solution is very generic and not limited to the usage of anomaly detection but also works for any standard supervised classification algorithms.
The invention claims an automated method for detecting decision regions of an AI based classification algorithm, comprising:

- providing multidimensional data points comprising measured sensor data,
- classifying the data points by applying the AI based classification algorithm,
- detecting decision regions by a data clustering algorithm, whereby each decision region contains data points of only one class,

the data clustering algorithm characterized by:

- the data points are represented by feature vectors belonging to a first class,
- each decision region is approximated by a set union of multidimensional boxes,
- wherein every box is spanned around one data point using a box generating algorithm.

With the generated boxes the decision regions can be approximated in their extent and easily further automatically evaluated.

In a further embodiment of the method the box generating algorithm comprises:

- generating the box with maximum volume, whereby artificially generated further data points in the box and on the surface of the box belong to the first class.

In a nutshell, all data points in a box belong to only one class.

In a further embodiment of the method a non-linear optimization method is used for generating the box.

In a further embodiment of the method the non-linear optimization method comprises the Levenberg-Marquardt Algorithm or the Stochastic Gradient Descent method.

In a further embodiment the method comprises:

- randomly generating data points by applying a probability distribution on the data points comprising measured sensor data,
- classifying the generated data points by applying the AI based classification algorithm.

In addition to data points belonging to measured sensor data further data points are automatically generated.

In a further embodiment of the method randomly generating data points and classifying these data points comprise randomly drawing around the feature vectors for a given sample-number feature vectors belonging to the first class.

In a further embodiment of the method the continuous probability distribution is limited to distributions described by the parameters mean and deviation, whereby the values of the feature vector are the means.

In a further embodiment of the method for every feature of every feature vector incrementally varying the deviation between a predetermined minimum deviation value and a predetermined maximum deviation value, and randomly drawing a predetermined sample number of feature vectors for every value of the incrementally varied deviation.

In a further embodiment of the method the continuous probability distribution is a normal distribution.

The invention further claims using the disclosed method for visualizing the decision regions by predetermined visualization techniques.

The invention further claims using the inventive method for: comparing a first classification algorithm with a second classification algorithm by comparing the decision regions detected according to the method of one of the previous claims.

The second classification algorithm can be a modification or a newer version of the first classification algorithm.

Finally, the invention claims a system, comprising at least one processor, and at least one memory including program code which when executed by the processor provides operations comprising:

- providing multidimensional data points comprising measured sensor data,
- classifying the data points by applying the AI based classification algorithm,
- detecting decision regions by a data clustering algorithm, whereby each decision region contains data points of only one class,

the data clustering algorithm characterized by:

- the data points are represented by feature vectors belonging to a first class,
- each decision region is approximated by a set union of multidimensional boxes,
- wherein every box is spanned around one data point using a box generating algorithm.

In a further embodiment of the system the box generating algorithm comprises:

- generating the box with maximum volume, whereby artificially generated further data points in and in the surface of the box belong to the first class.

In a further embodiment of the system a non-linear optimization method is used for generating the box.

In a further embodiment of the system the non-linear optimization method comprises the Levenberg-Marquardt Algorithm or the Stochastic Gradient Descent met

Further benefits and advantages of the present invention will become apparent after a careful reading of the detailed description with appropriate reference to the accompanying drawings.

BRIEF DESCRIPTION OF THE DRAWINGS

FIG. 1    shows a dot diagram of a classification algorithm with two features and two classes using initial data,

FIG. 2    shows a dot diagram of a classification algorithm with two features and two classes using additionally further data,

FIG. 3    shows a dot diagram of a classification algorithm with two features and two classes showing only decision regions of class 1, and

FIG. 4    illustrates an embodiment of the box generating algorithm.

DETAILED DESCRIPTION OF THE DISCLOSURE

Given a by sensors measured data matrix $x = (x_1, ...,x_n)$ of dimension $(n \times P)$ - P = feature space dimension, n = number of initial vectors - and a model function $f(.)$ that outputs a class (i.e., it is a classifier). The initial feature vectors (= initial data) are applied to the model function $f(.)$. In case of outputting a failure type we have $f(x_i) = c_k$ for $i = 1, ..., n$ where $c_k \in C$ and $C$ being a set of different classes. E.g., $c_1 = $'no failure', $c_2 = $'slight anomaly', $c_3 = $'severe failure', etc.

For a better overview and the argumentation below, we assume only two different classes ($K = 2$) but this is without loss of generality. Since the disclosed methods are model agnostic, we are not restricted to any classifier and $f(.)$ can be a Deep Neural Network, a Random Forest or any other suitable Method that outputs a predicted class label (satisfying condition a above).

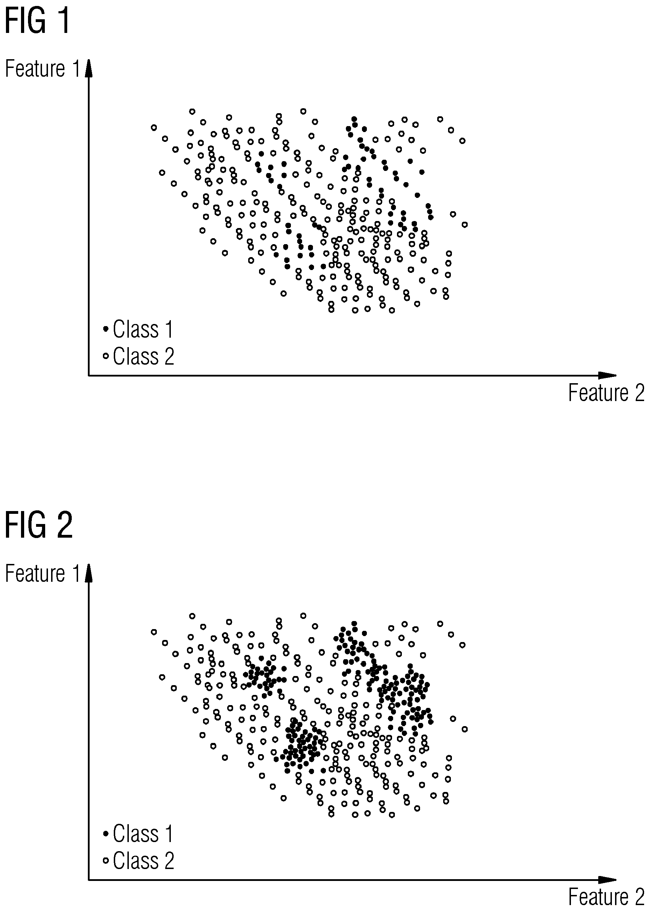

After applying the model function $f(.)$ we need to explore its global decision regions. An illustration of this situation is given in FIG. 1 where the two axes correspond to two features and the dots represent two different classes $c_1$ (filled-in dots in FIG. 1) and $c_2$ (blank dots in FIG. 1) as outputted by the model function $f(x_i)$ (= algorithm).

To determine the decision regions for class 1 we sample the space of the decision region of class 1 denser by adding new dots that belong to class 1 (= further data). Further data are achieved by applying the following method:

1. We set the minimum and maximum sampling area around the dots determined by the initial data to $d_{min}$ and $d_{max}$ and set $p$ for the number of samples to draw. Define the index set of all dots belonging to the class $c_1$ of interest to be $S = \{x_i : f(x_i) = c_1\}$ (= initial feature vectors belonging to class $c_1$). Set initially $S^* = \{\}$
2. For $d \in \{d_{min},...,d_{max}\}$ and with increment $inc$ do: For $x_i \in S$ do

   i. Sample (= draw randomly) $p$ times from a normal distribution $N(x_i, d^2)$ to obtain data $z = (z_1, ..., z_n)$ (= further feature vectors; In case of multidimensional input-features sampling can be done with a multivariate normal distribution).
   ii. Update $S^* = \{z_i : f(z_i) = c_1\} \cup S^*.$
   iii. increment $d$ with $inc$ and go to i.

Sampling is fast with modern computers and the whole loop number 2 above can be preferably parallelized, hence satisfying condition 1b and 1e above. Adding the dots from $S^*$ results in the illustration of FIG. 2, where the regions for class 1 (fille-in dots) become much denser.

An alternative would be genetic statistical algorithms but, in most cases, but drawing from a normal distribution with increasing variance is sufficient.

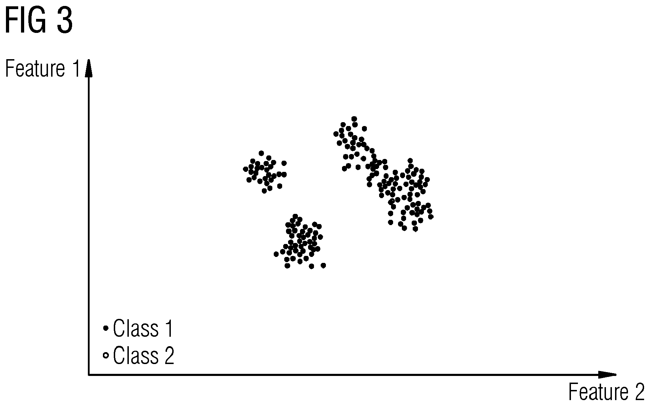

According to FIG. 3 we now subset the data such that only data points from $S^{**} = S^* \cup S$ (filled-in dots) remain. On the data in the set $S^{**}$ we now apply the well-known DBSCAN algorithm (with complexity $O(|S^{**}|log(|S^{**}|))$) thereby satisfying condition 1e which allows to cluster dense objects with irregular shapes given two hyperparameters $\varepsilon$ and $MinPts$ where $\varepsilon$ is the radius around a given point and $MinPts$ gives the minimum number of dots that we expect within the radius of the sphere to call it a dense region. Both parameters shall be defined according to specific needs.

Given the sampling procedure described above it is for example reasonable to set

$$\epsilon = 2\frac{d_{min}+d_{max}}{2} = d_{min} + d_{max}$$ and **MinPts** = $\sqrt{p}$ (= minimum number of points required to form a dense region).

The output of DBSCAN will be a Cluster-ID for each dot that belongs to **S\*\*** and it also can identify noise (i.e., dots in **S\*\***) that do not belong to a dense region.

From the analysis of this it can be identified (in a human-interpretable way as demanded by condition 1c): How many decision regions exist can be inferred by counting the number of Cluster-IDs. The size of the decision regions can be evaluated by calculating the number of points that fall in the respective clusters. Indications of overfitting are possible by counting the number of dots that are classified as noise by DBSCAN.

Furthermore, it is possible to visualize the regions by suitable visualizations techniques (e.g., scatterplot matrices are principal components).

Given the general procedure above we need to add here how this procedure generalizes to the comparison of multiple algorithms (condition Id). E.g., if we want to compare the decision regions of $f_1(x_i)$ and $f_2(x_i)$. This is rather simple. If we want to know about the decision region for class $c_k$, we simply apply the disclosed algorithm separately for both models. Then we can use DBSCAN to investigate the following cases

|  | $f_1$ indicates $c_k$ | $f_2$ does not indicate $c_k$ |
|---|---|---|
| $f_2$ indicates $c_k$ | Cluster $$\{x_i \in S^*: f_1(x_i) = f_2(x_i) = c_k\}$$ | Cluster $$\{x_i \in S^*: f_1(x_i) \neq c_k, f_2(x_i) = c_k\}$$ |
| $f_2$ does not indicate $c_k$ | Cluster $$\{x_i \in S^*: f_1(x_i) = c_k, f_2(x_i) \neq c_k\}$$ | Cluster $$\{x_i \in S^*: f_1(x_i) = f_2(x_i) \neq c_k\}$$ |

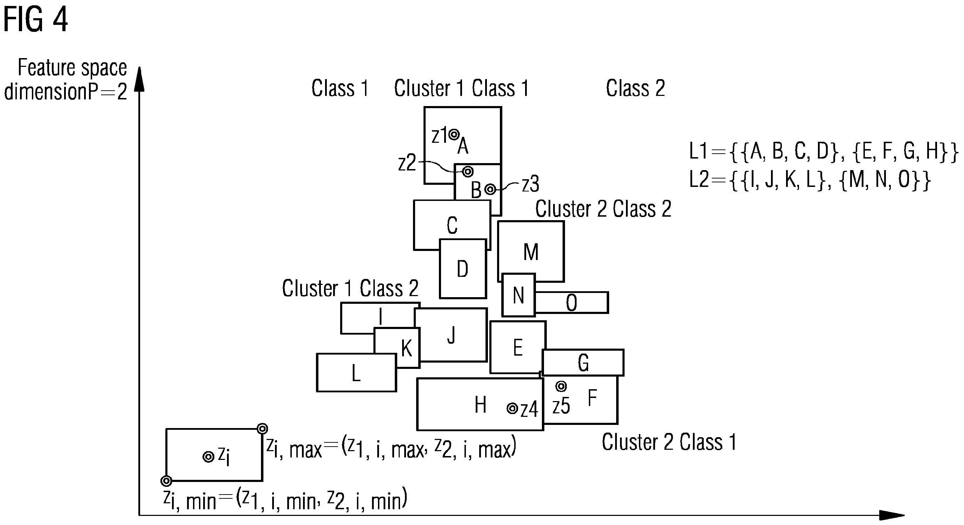

If we apply DBSCAN to the four sets shown in the table above, we can detect the decision regions where both algorithms agree and those where they disagree and how they disagree. Subsequently, a further method for exploring the decision regions after applying the model function **f(.)** is disclosed. Exploration can be achieved by applying the following method and illustrated in FIG. 4.

1. Select a set **T** of sample (data) points **z** with **N** elements (the elements of **z** are **P** dimensional vectors). Selecting the rows of the data matrix **x** is a natural choice (in this case **N** = **n**). (Alternatively, the union of points generated by repeating Algorithm 1 step 1 and 2 for each class **k** can be used. This results in a denser sampling and could be done in a second iteration if the result of this algorithm 2 is not satisfactory to the user.) As a further alternative this can even be done in an adaptive fashion as indicated in step e) of this method.

2. Initialize **K** (= number of classes) lists / set $L_k$ as the empty list: $L_k$ = [] for **k** = **1, ..., K**. The $L_k$ will be a list of "clusters", with a cluster itself being a list of (partially) overlapping boxes.

3. For each data point $z_i \in$ **T:**

    a. If $z_i$ is contained in a cluster related box in list $L_k$, with $k = f(z_i)$ skip following steps and continue with next $z_i$.

    b. Determine a vector $z_{i,min}$ in the feature space such that (using an appropriate nonlinear optimization method)

        i. $z_{i,j,min}$ < $z_{i,j}$ for all features **j** = **1, ..., P**

        ii. **f(p)** = **f($z_i$)** for all $z_{i,j,min} \leq p <$ $z_{i,j}$ [*]

        iii. $\Pi_{j=1,...,P}(z_{i,j} - z_{i,j,min})$ is maximized i.e., that the axis-parallel box spanned by $z_i$ and $z_{i,min}$ has maximum volume.

    Note: components of $z_{i,min}$ can become $-\infty$. If it is the case that one component becomes infinite, the optimization problem is restarted with the remaining (non-infinite) components as variables and the infinite component fixed.

    c. Determine $z_{i,max}$ such that (using an appropriate nonlinear optimization method)

        i. $z_{i,j,max}$ > $z_{i,j}$ for all features **j** = **1, ..., P**

        ii. **f(p)** = **f($z_i$)** for all $z_{i,j,max} \geq p >$ $z_{i,j}$ [*]

        iii. such that $\Pi_{j=1,...,P}(z_{i,j,max} - z_{i,j})$ is maximized i.e., that the axis-parallel box spanned by $z_i$ and $z_{i,max}$ has maximum volume.

Note: components of $z_{i,max}$ can become $\infty$. If it is the case that one component becomes infinite, the optimization problem is restarted with the remaining (non-infinite) components as variables and the infinite component fixed.

d. Now consider the box spanned by the vectors $z_{min} = (z_{1,min}, ..., z_{P,min})$, $z_{max} = (z_{1,max}, ..., z_{P,max})$. Find the cluster in list $L_k$ which has partial overlap with the box under consideration. There is partial overlap of a box and a cluster if one of the boxes in the cluster has partial overlap with the box under consideration.

    i. If the box under consideration is fully contained in the cluster: do nothing (continue with step e)
    ii. If the box under consideration is partially contained in the cluster: add the box to the cluster.
    iii. If the box under consideration is not overlapping with any cluster, create a new cluster with only the box as element and add the new cluster to $L_k$.
    iv. If the box under consideration is overlapping with two or more clusters, combine the clusters into one cluster and add the box under consideration to the newly formed combined cluster

e. [optional] If the result is not satisfactory yet and all points in $T$ have been processed, add (one or more) new point(s) to $T$. The point(s) can be chosen to a suitable criterion.

4. We have now for each class a list of boxes that all lie inside the decision region for class $k$ separated into non-overlapping clusters of boxes.

[*] To ensure that during optimization the box under consideration is completely within the decision region multiple approaches are feasible. For example:

A) The simplest is to generate points that lie in the box and to verify for each point whether it is inside of the decision region. If all points are belonging to the class k, the box is considered to be inside the decision region of class k. This random sampling could consist of the following collection: 1) random points inside the box, 2) random for points on box surfaces and edges and 3) a (random) selection of box corner points. If the feature space dimensionality P is not too large 3) could include all corner points (not just a random selection) (Note: there are 2^P corner points).

B) If one has access to the computer code of the classifier model f, also an interval arithmetic approach is feasible. Evaluating the classifier f with interval arithmetic (instead of normal floating-point arithmetic) one automatically gets this information whether all points inside the box are corresponding to the same class or not. To achieve this the input parameter to the classifier is the interval $[z_{j,min}, z_j]$ (and the classifier $f$ evaluated with interval arithmetic). (For comparison: Normally the classifier would be evaluated with $z_j$ as argument and evaluated with floating point arithmetic, but then give only information about the point $z_j$)

Nonlinear optimization methods are e.g., Levenberg-Marquardt Algorithm and Stochastic Gradient Descent method.

## Claims

1. An automated method for detecting decision regions of an AI based classification algorithm, comprising:

    - providing multidimensional data points comprising measured sensor data,
    - classifying the data points by applying the AI based classification algorithm,
    - detecting decision regions by a data clustering algorithm, whereby each decision region contains data points of only one class,

the data clustering algorithm **characterized by**:

    - the data points are represented by feature vectors belonging to a first class,
    - each decision region is approximated by a set union of multidimensional boxes,
    - wherein every box is spanned around one data point using a box generating algorithm.

2. The method according to claim 1, whereby
the box generating algorithm comprising:

- generating the box with maximum volume, whereby artificially generated further data points in the box and on the surface of the box belong to the first class.

3. The method according to claim 2, whereby
   a non-linear optimization method is used for generating the box.

4. The method according to claim 3, whereby
   the non-linear optimization method comprises the Levenberg-Marquardt Algorithm or the Stochastic Gradient Descent method.

5. The method according to one of the previous claims, comprising:

   - randomly generating data points by applying a probability distribution on the data points comprising measured sensor data,
   - classifying the generated data points by applying the AI based classification algorithm.

6. The method according to claim 5,

   - wherein randomly generating data points and classifying these data points comprise randomly drawing around the feature vectors for a given sample-number feature vectors belonging to the first class.

7. The method according to claim 6,

   - wherein the continuous probability distribution is limited to distributions described by the parameters mean and deviation,
   - whereby the values of the feature vector are the means.

8. The method according to claim 7, further comprising:

   - for every feature of every feature vector incrementally varying the deviation between a predetermined minimum deviation value and a predetermined maximum deviation value, and
   - randomly drawing a predetermined sample number of feature vectors for every value of the incrementally varied deviation.

9. The method according to one of the claims 5 to 8,

   - wherein the continuous probability distribution is a normal distribution.

10. Using the method of one of the previous claims for:

    - visualizing the decision regions by predetermined visualizations techniques.

11. Using the method of one of the previous claims for:

    - comparing a first classification algorithm with a second classification algorithm by comparing the decision regions detected according to the method of one of the previous claims.

12. System, comprising at least one processor, and at least one memory including program code which when executed by the processor provides operations comprising:

    - providing multidimensional data points comprising measured sensor data,
    - classifying the data points by applying the AI based classification algorithm,
    - detecting decision regions by a data clustering algorithm, whereby each decision region contains data points of only one class,

    the data clustering algorithm **characterized by**:

    - the data points are represented by feature vectors belonging to a first class,

- each decision region is approximated by a set union of multidimensional boxes,
- wherein every box is spanned around one data point using a box generating algorithm.

13. The system according to claim 12, whereby the box generating algorithm comprises:

   - generating the box with maximum volume, whereby artificially generated further data points in and in the surface of the box belong to the first class.

14. The system according to claim 13, whereby a non-linear optimization method is used for generating the box.

15. The system according to claim 14, whereby the non-linear optimization method comprises the Levenberg-Marquardt Algorithm or the Stochastic Gradient Descent method.

# FIG 1

Feature 1

• Class 1
○ Class 2

Feature 2

# FIG 2

Feature 1

• Class 1
○ Class 2

Feature 2

# FIG 3

# FIG 4

Feature space dimensionP=2

Class 1    Cluster 1 Class 1          Class 2

z1 A
z2
B z3
C
D

Cluster 2 Class 2
M
N
O

Cluster 1 Class 2
I
K
J
L
E
G
H z4  z5  F

$L1=\{\{A, B, C, D\}, \{E, F, G, H\}\}$
$L2=\{\{I, J, K, L\}, \{M, N, O\}\}$

Cluster 2 Class 1

$z_i$
$z_{i, max}=(z_{1, i, max}, z_{2, i, max})$
$z_{i, min}=(z_{1, i, min}, z_{2, i, min})$

**EP 4 202 780 A1**

Europäisches
Patentamt
European
Patent Office
Office européen
des brevets

# EUROPEAN SEARCH REPORT

Application Number

EP 21 21 6942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIONG THYE GOH ET AL: "Box drawings for learning with imbalanced data", KNOWLEDGE DISCOVERY AND DATA MINING, ACM, 2 PENN PLAZA, SUITE 701 NEW YORK NY 10121-0701 USA, 24 August 2014 (2014-08-24), pages 333-342, XP058053722, DOI: 10.1145/2623330.2623648 ISBN: 978-1-4503-2956-9 * abstract * * figure 1 * * sections 1, 2, 3.1, 3.2, 3.2.1, 4 * | 1-15 | INV. G06N3/08 G06N20/20 G06N5/00 |
| X | US 2017/308801 A1 (CAI XINMIN [US] ET AL) 26 October 2017 (2017-10-26) * abstract * * figures 2-5 * * paragraph [0007] * * paragraph [0027] - paragraph [0039] * | 1-15 | |

TECHNICAL FIELDS
SEARCHED (IPC)

G06N

The present search report has been drawn up for all claims

| Place of search | Date of completion of the search | Examiner |
|---|---|---|
| The Hague | 8 June 2022 | Papadakis, Georgios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 6942

08-06-2022

| Patent document cited in search report | | Publication date | Patent family member(s) | | Publication date |
|---|---|---|---|---|---|
| US 2017308801 | A1 | 26-10-2017 | CN 107111309 | A | 29-08-2017 |
| | | | EP 3191905 | A1 | 19-07-2017 |
| | | | KR 20170055510 | A | 19-05-2017 |
| | | | US 2017308801 | A1 | 26-10-2017 |
| | | | WO 2016040085 | A1 | 17-03-2016 |